Europäisches Patentamt

European Patent Office

Office européen des brevets

(11) Publication number: **0 309 428**
**A2**

# EUROPEAN PATENT APPLICATION

(21) Application number: **88850298.6**

(22) Date of filing: **12.09.88**

(51) Int. Cl.⁴: **G 06 F 13/18**

(30) Priority: **23.09.87 US 100379**

(43) Date of publication of application:
**29.03.89 Bulletin 89/13**

(84) Designated Contracting States: **DE FR GB**

(71) Applicant: **International Business Machines Corporation**
**Old Orchard Road**
**Armonk, N.Y. 10504 (US)**

(72) Inventor: **Pence, Jerry W.**
**4130 North Circulo Manzanillo**
**Tucson, AZ 85715 (US)**

(74) Representative: **Ekström, Gösta E.**
**IBM Svenska AB Intellectual Property Department**
**S-163 92 Stockholm (SE)**

(54) **Prioritizing access to multiported data processing resources.**

(57) A multiported resource(ll), such as a tape or disk media library with ports (13) being drives or record players-recorders, is connected to a plurality of host processors (10). The host processors access the resource using short duration accesses for on-going data processing operations. Such short duration accesses usually are for one or a few data sets and take a relatively short time to complete. The host processor also access the resource for data volume (many, many data sets) dumping, volume backup, volume recovery (return volume contents to one or more host processors), volume migration (transfer contents of one volume to another volume) and the like. Such extensive data transfers require extended times to complete, such as one or more orders of magnitude longer than the short accesses. Access priorities are setup for ensuring efficient usage of the host processors and the multiport resources.

Fig. 1

Description

## PRIORITIZING ACCESS TO MULTIPORTED DATA PROCESSING RESOURCES

Present invention relates to data processing systems particularly to the management and control of peripheral subsystems attached to one or more host processors.

Data processing systems have always employed some form of host processors and peripheral systems, also referred to as subsystems. It has always been desired to balance the operation of the peripheral subsystem with that of the host processor. In these regards, various approaches have been followed over the years to maximize efficiency not only of the peripheral subsystem, but more particularly of the host processor. Such maximization requires optimizing many input/output operations. To this end, Vigil et al., in U.S. Patent 3,840,859, measured the level of current input/output operations with specific control units which were interposed between the peripheral devices in the subsystem and the host processors. When the level of input/output operations exceeded a predetermined threshold for a particular control unit, that control unit could not accept any more input/output operations. This limitation on a single control unit enabled the host processors to adjust input/output operations among a plurality of such input/output control units for optimally allocating the input/output control units of the system. While this particular arrangement whenever the input/output operations have similar characteristics, it does not address the problem of a host processor monopolizing one or more peripheral devices. One of the persistent problems in data processing is that once a peripheral device, such as a magnetic tape unit, optical disk, magnetic disk file, communication controller and the like, are reserved for a host processor, then the host processor can utilize that particular resource to the exclusion of other host processors until the using host processor decides to terminate the operation. Such so-called input/output device monopolizing is often found where the input/output operation between a given host processor and a given peripheral has high speed operations and involves substantial data sets.

Costa et al, U. S. Patent 3,811,013 shows a pair of processors for managing a telephone exchange. The load of the communication path control is shifted between the two communications processors for preventing overloading. The heavily loaded processor shifts loads to the lighter loaded processor. While such an arrangement is useful when you have a relatively small number of processing units, it becomes cumbersome when the number of independent and distributed processing units become relatively large, and wherein those relatively large number of host processors share an equally large plurality of peripheral subsystems.

U. S. Patent 3,593,299 shows an input/output control which limits the loading of input/output channels of a host processor. The reservation control is suitable for an I/O channel, but may not be applicable to accommodate a large diversity of input/output operations as required to prevent monopolization of I/O devices.

U. S. Patent 4,476,522 teaches management of the host processor's main memory space for efficiently using a plurality of peripherals. This patent is cited to show importance of management of the input/output operations to the efficient usage of data processing systems.

U. S. Patents 4,466,063 and 4,430,699 both relate to load sharing between distributed processor systems. There is no reservation of resources for short duration jobs such as contemplated in the present application.

Finally, U. S. Patent 4,363,094 teaches that utilization of redundant parts in a communication processor can be advantageous for handling varying communication loads. This load central and other load balancing and load accommodating algorithms are known, but appear to be cumulative with respect to the present invention. The above-cited references believe to be a fair representation of the state of the art with respect to the invention sought to be patented in this application.

It is an object of the present invention to efficiently control input/output (I/O) operations which are characterized by a large number of short duration I/O accesses to a peripheral subsystem which contend for access with a relatively large number of long duration accesses which tend to monopolize utilization of the input/output facilities of a data processing system.

A multiported subsystem, such as a data media library having a plurality of ports constituted by media players, is controlled such that short duration accesses have a predetermined proportion of the ports reserved for short duration accesses, while long duration accesses can utilize the ports only up to said predetermined proportions. The short duration accesses can completely monopolize the operation of the multiported subsystem to the exclusion of the long duration accesses. It is preferred that the management of the ports be program implemented, either in a peripheral subsystem itself, or in one or more host processors sharing the multiported subsystem. The proportion reserved for short duration access is dynamically varied in accordance with an expected need for such short duration accesses. For example, during a normal working day (first shift) the proportion reserved for short duration accesses is relatively high while during non-working portions of a day (midnight to 8:00 A.M. for example) the proportion reserved for short duration accesses is relatively low.

The invention, which is defined in the attached claims, is described in detail below with reference to the drawings, of which:

Fig. 1 is a simplified block diagram of a data processing system which may advantageously employ the present invention.

Fig. 2 is a simplified block diagram of a programmed implementation of the invention usable with the Fig. 1 illustrated data processing system.

Fig. 3 graphically illustrates management of the input/output operations of the Fig. l illustrated system.

Fig. 4 illustrates some tables used in Fig. 2 programmed implementation of the present invention.

Referring now more particularly to the drawing, like numerals indicate like parts and structural features in the several figures. A plurality of host processors 10 are operatively coupled to one or more multiported data-storing subsystems 11. Each of the subsystems include a media library 12 which can be constructed in accordance with many known diverse library construction techniques. An older one is shown in Burke et al., U. S. Patent 2,941,738. A plurality of drives 13 are arranged to receive and return various record media from the respective libraries 12. The referenced patent shows a magnetic tape library using 2400 foot tape reels. In that instance, each of the drives 13 constitute a single magnetic tape handler. The library can also be a microfiche system wherein the drives 13 are microfiche readers. Either magnetic, optical or other forms of record disks may be stored as media in a library with the drives respectively then being players or recorders designed to operate with such disk media. Some of the drives may be players only while other drives may be both recorders and players. Each of the drives 13 are individually operatively coupled to the host processors 10, all as indicated by double headed arrows 14.

As is known, control units may be interposed between the respective drives 13 and the host processors 10. Each of the subsystems 11 include a control 15, which is usually a programmed computer, for operating the library and the drives 13. The operation of the library 12 includes commanding the library mechanism (not shown) for transporting media between media storage bins and the various drives 13. library 12 has a large geometric extent, then the various storage bins for the media establish an access affinity of the stored media for the ones of drives 13. For maximum efficiency, it is desired, particularly for short duration accesses, to move the media to a closest one of the drives 13 for minimizing transit time and thereby reducing total access time to desired media. The host processors 10 also are operatively coupled to the respective controls 15 for giving commands, etc., as is known in the art.

When the host processors are operatively coupled to a library storage subsystem 11, those host processors also are coupled to various other storage media (not shown) used in day-to-day operations. This operation is shown in the patent to Kamionka et al, U. S. Patent 4,528,624 wherein high performance direct access storage devices (DASD) provide an operating peripheral memory or storage unit for their host processors 10 while the slower access DASD'S and libraries provide backup and archiving. In many instances, the libraries are used for both backup, retrieval and migration targets, as explained by Kamionka. Many data recovery operations require but a relatively modest amount of data to be transferred. As such, recall or recovery often requires but a short duration access to the multiported resource or library subsystem 11. Such short duration accesses are essential to the efficient operation of the host processors 10. Accordingly, minimal delay is desired as productivity may be adversely affected when access delays beyond a certain threshold are incurred. A second type of access is a so-called "long duration" access, which may take an order of magnitude or more of elapsed time for completion than the short duration accesses. For example, in a library subsystem 11 a short access including media transport time from a storage bin to the drive, is measured in maximum amount of seconds. If the media is prestaged into a drive 13 then access time is measured in milliseconds. For a long duration operation, such as volume transfer (the data contents of a data storage volume--many, many data sets--was transferred as a unit) can take several minutes. It may also be that the operations involve larger capacity volumes, i.e. many more data sets than found in many of the earlier day DASD'S, then the total data transfer can take hours for completion. Since most data processing system operate in a time constrained environment, i.e. there is more to do than the resources can actually efficiently do, appropriate management of those resources is essential if resource utilization is to be maximized.

In accordance with the present invention, a resource control mechanism is located either in a single host processor 10, or divided among the host processors 10, in a control unit (not shown), or in a managing control unit for all of the multiported resources. The control mechanism specifies for the data processing system, or a major portion thereof, the proportion or ratio of the ports of a multiported resource that can be used for the long duration accesses at any given instant. The number of ports allocatable at a given time for such long duration accesses vary with time of day and time of year. For example, at the end of the month when monthly reports are due from a business operation, the number of long duration accesses may be more limited than in the middle of the month when such reports need not be quickly prepared. Similarly, during a twenty-four hour day, during so-called non-working hours, the number of short duration accesses needed for efficiently using host processors 10 may be greatly reduced compared to daytime hours, for example. In most situations, in accessing data from a library subsystem 11, a requesting host processor user process may be required to wait a short time for accessing the library subsystem 11 for each short duration access. However, it is desired to prevent a queue of such short duration accesses from accumulating to the extent that the host processor 10 resources for computation are not adversely affected and that the daily work or other long duration accesses cannot be started in a timely manner.

When a number of ports (without specific allocation of the ports) are reserved for short duration accesses, and a short duration access request is waiting, a later received long duration access request may take priority over the short duration access request whenever the proportion of ports used for short duration accesses exceeds the reserve or proportion of ports designated for such operations. A long duration access request having a "no wait" state (the process can proceed without waiting for the data being retrieved or stored) should be handled in a manner that if a wait option had been instituted, and the delay is relatively short (less than five minutes, for example), then the long duration access request should be handled at the expiration of a next short duration access. On the other hand, when a long duration access request, with a wait option, is supplied by a user process and the wait for access to a port is long; such as when the proportion of ports available for long duration accesses has been utilized, then the request should be failed because an extended wait would interfere with host processor 10 computation efficiencies.

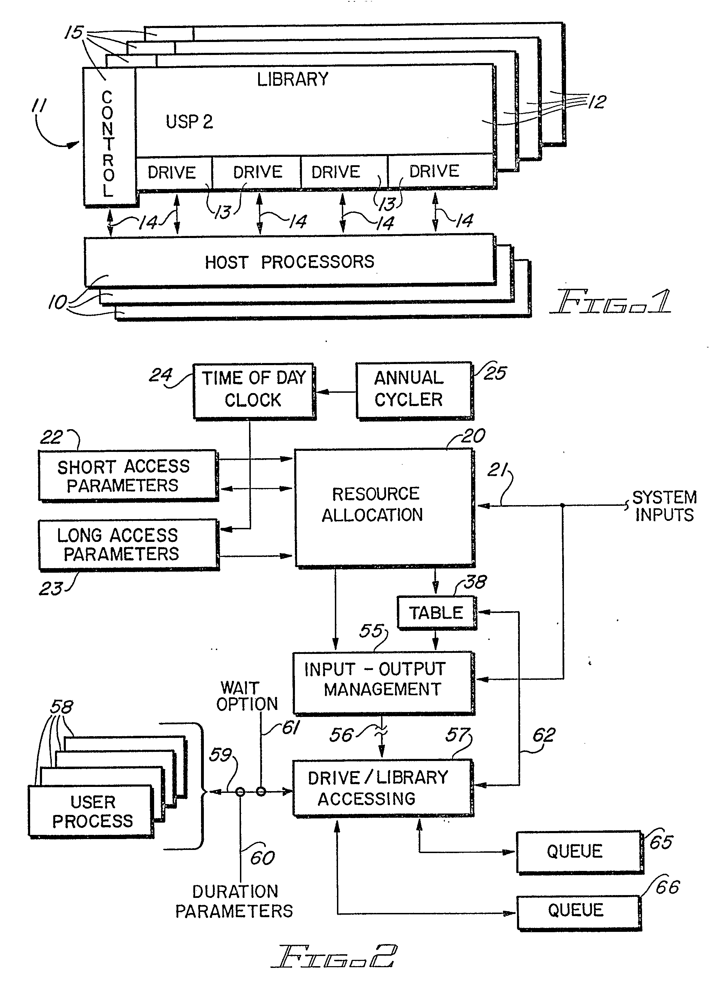

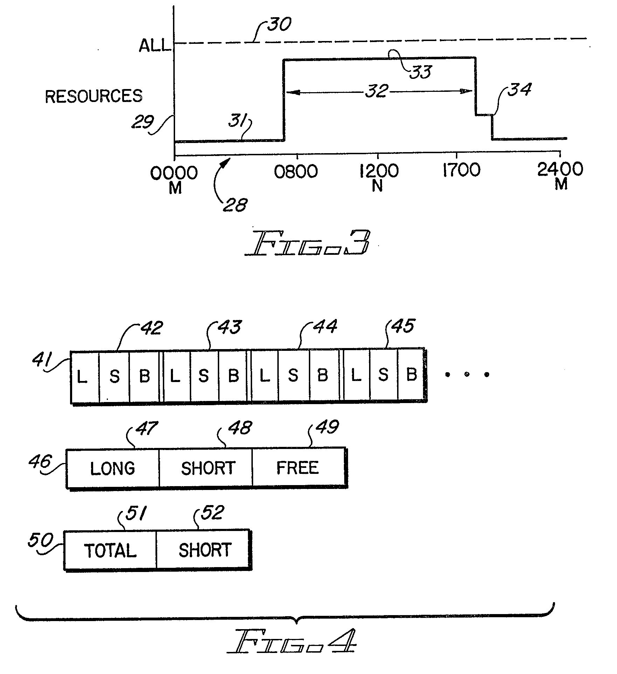

Fig. 2 shows a programmed implementation of the invention which manages the multiport resource environment and the queues of requests for achieving utilization efficiencies while not unduly delaying lower priority data transfers, often including long duration access requests. A resource allocation program 20 sets up the operating resource control environment. This program requires system inputs 21 which define the number of ports available and the other known operating parameters of the data processing system. Additionally, various short access parameters and long access parameters 22 and 23, respectively, define the operational characteristics of such accesses. Resource allocation program 20 merges the parameters 22 and 23 with the system inputs 21 for establishing table 38 which defines the management of the ports 13 of the multiported resource. Since the data processing system requirements change with time and with the calendar, a time of day clock 24 is operatively associated with the short access and long access parameters 22, 23 for changing such parameters with the time of day. In this manner, resource allocation 20 generated table 38 more faithfully represents data processing system requirements. An annual cycler 25 operates through time of day clock 24 to further modify the parameters 22 and 23. Such parameters indicate a need of access by the host processors 10 for the respective characteristics of the short and long duration accesses.

Fig. 3 illustrates one arbitrary example of the access parameters. Abcissa 28 represents the elapsed time of a single day from midnight at 0000 through midnight at 2400. Vertical ordinate 21 represents the resources that are available, i.e. one of the system inputs 21. Dashed line 30 represents 100% of the port resources. For purposes of illustration, it is assumed that all of the ports are continuously available during the entire day. As the number of port resources are varied off and on line from the multiported resource, then the proportion of committed long to short duration accesses may change. Numeral 31 designates a first proportion of long to short accesses permitted during the early hours of the day. For example, up to about 7:00 A.M.(0700). The vertical portion between line 31 and dashed line 30 represents the maximum number of ports allocatable for long duration accesses. The portion of the graph below line 31 represents the minimum number of ports reserved for all short duration accesses. At the onset of the day shift, represented by double headed arrow 32, the proportion of allowable long duration accesses radically reduces, as indicated by line 33. That is, the host processor 10 at the onset of the day shift, has to service, for example, terminal systems and the like, which require a relatively large number of short duration accesses. At the end of the shift, such as 5:00PM (1700), the number of short duration accesses may rapidly diminish allowing more long duration accesses to occur, as indicated by line 34. It is to be understood that the Fig. 3 graphical illustration is for pictorial purposes with the actual proportions and variations in proportions of the long to short duration accesses being empirically determined and dynamically changed as the usage of the data processing system changes.

Table 38 is shown in part in Fig. 4. Register 41, which can be a data storage area on a disk, includes a status register for the four drives 13 of library subsystem 11. The address of register 41 indicates which of the library subsystem 11 the register represents. The byte address within the register identifies which of the drives 13 is being represented. For example, bytes contained in area 42 represent the left most drive 13 of Fig. 1, numeral 43 designates the portion for the drive immediately to the right of the left most drive, while numerals 44 and 45, respectively, represent the two right most drives of Fig. 1. Each of the byte portions 42-45 are divided into three sections. The L byte indicates that a long duration access is occurring for the designated port. The S byte represents that a short duration access is occurring. The B byte indicates that the port is busy and when zero is not busy. When all of the three bytes L, S and B are zero, then the port is free for allocation. Other forms of status representation can be utilized as is well known. The Fig. 2 illustrated resource allocation program 20 and a later described program maintain the currency of register 41 contents. There can be a plurality of registers 41 respectively for different library arrangements or free standing devices. The summary of the status is stored in register 46. Portion 47 stores the total number of ports (drives 13) currently allocated for long duration accesses. Portion 48 stores the total number of ports allocated for short duration accesses, while portion 49 indicates the total number of ports that are not allocated. Numeral 50 designates yet another central register which shows the total number of ports available in area 51 with the number of ports reserved for short duration accesses in area 52.

The construction of the various programs is best illustrated by a simplified flowchart which defines the functions to be performed for achieving the operation of the invention in a programmed environment. The programming details relating to housekeeping functions and other operations required for completing input/output operations are dispensed with for purposes of clarity in presenting the present invention. Further, such operations are so well known that to incorporate that description into this application would be unduly repetitious. The flowcharts use certain abbreviations. A hyphen (-) indicates the beginning of a function definition. "I" means update the inventory of resources, such as in table 38. "I&R" means update the inventory as described above and return without doing any other functions. "R" means return. "?" means the logical function IF. The "less than" symbol (<) with Y means that if the answer to the question is yes, do the next stated function, '<N' means if the answer is no, then do the next stated. The greater than symbol (>) indicates "do" the next stated logical function. "---" means that the following statement is a comment.

When a system input 21 is received resource, allocation 20 then does the following:

```
-?LIB or LRD
   -<Y >I
->R
```

The above flowchart represents initialization input information. The first line questions whether there is a library (LIB) or does the information relate to the device 13 (LRD--library recording device). A subset represented on the second line is that if the answer is yes then the inventory of table 38 is updated with whatever information is associated with the header LIB or LRD. Then the program returns to the caller, as indicated in the third line.

System configuration functions occur not only at initialization time but during normal data processing. Such system configuration function may incorporate a new peripheral device, such as device 13, into the subsystem, i.e. it becomes operable for one reason or another. Such configuration operation is called VARY ON. Taking a device out of operation is called VARY OFF. This, of course, affects the total number of ports available indicated in area 51 and alters the number of free devices indicated in area 49.

Such configuration information is received as a system input 21. Such system input may be from various sources, not pertinent to an understanding of the present invention.

The flowchart for achieving such updating of the table 38 inventory is shown below:

```
-?VARY ON LRD
   -<Y >I
-?VARY OFF LRD
   -<Y >I
->R
```

The parameters of the proportion of the devices used for short duration accesses may vary as indicated in the Fig. 3 graph. Such changes may be from parameters 22 and 23 as activated by time of day clock 24, or may be from a program that is querying the status of the current proportion. Such query may lead to a later change in a proportion to alleviate an observed unexpected reduction in host processor 10 computation efficiency. A flowchart for such change is shown below and is self-explanatory.

```
-Parse command
-?Change limits
   -<Y >I
-?Query Inventory
   -<Y >set query inventory flag
-?Stop
   -<Y >set shutdown flag
->R
```

Resource allocation program 20 has a software interface with input/output management program 55. In computer programming supplied by IBM, program 55 is one IOS program used for managing all input/output of the host processor 10. In such an instance, system input 21 first goes to input/output management program 55, then to resource allocation program 20, i.e. there is a pass-through. Also operatively coupled to input/output management program 55 is a drive/library accessing program 57 which may be either executed in a host processor 10 or all of the host processor 10 using a common table such as shown in Kamionka et al, supra, or may be an external processor dedicated to managing peripheral data storage. As indicated by numeral 56, the drive/library accessing program 57 has access to tables 38 as indicated by double headed arrow 62, both for recording changes therein and for reading the contents thereof. Such table 38 may be a common resource available to all host processor 10 or may be dedicated to just one host processor 10 which manages all of the multiported resources. The information needed to manage the port accessing is received from a plurality of user processes 58 being executed in any of the host processors 10. A user process is typically an application program but can also be some system oriented program, such as VM, DFHSM (Data Facility Hierarchical Storage Manager--a program product of IBM) Each of the user processes 58 independently send requests for access to the library subsystem 11 as indicated by double headed arrow 59. Such requests will include duration parameters 60, i.e. is it a short duration request or a long duration request. Such duration parameters may be implicit rather than explicit. For example, the request for access may include extent data, i.e. the number of storage areas to be accessed. From such extent data drive/library accessing program 57 may determine the characteristics of the requested access for classifying it in short duration or long duration access. The so-called wait option is indicated at numeral 61. When the wait option is turned on, it means that the requesting user process 58 is waiting for the library subsystem 11 response. A so-called no-wait indication means that the user process 58 is proceeding with its computation and not waiting for a response. The wait option is found in the DFHSM program, supra. Drive/library accessing program 57 may receive many requests from many users 58 and have to establish queues for such users. Queue 65 is designated for short duration access requests. Queue 66 is designated for long duration access requests. Such queues not only include identification of the requesting user processes, time of receipt, priority indications and the like such that drive/library accessing program 57 can blend the queued request into the current status of the resource utilization in the data processing system.

The flowchart listed below illustrates the operation and internal structure of the drive/library accessing program 57. In the flowchart below, the term LTUA means long term unit allocation and represents an allocation necessary for servicing a long duration access request.

The functions performed and program structure required for performing the function for allocating a device 13 (termed LRD in the flowchart) is shown below.

(The allocation request is received with parameters specifying options for LTUA or short, wait or no-wait and wait only for short duration requests.)

```
-?No-wait
        -<Y >?short   (no-wait)
            -<Y >?LRD available   (no-wait, short)
                -<Y >assign LRD, I&R
                -<N >RC=none available, R
            -<N >?LRD available (no-wait, LTUA)
                -<Y >?below LTUA limit (no-wait, LTUA, LRD
                        available)
                    -<Y >assign LRD, I&R
                    -<N >RC=all LTUA in use, R
                -<N >?below LTUA limit   (no-wait, LTUA, no
                        LRD available)
```

```
                    -<Y >?add LTUA queued & still below LTUA
                          limit
                        -<Y >RC=wait would have worked, R
                        -<N >RC=all LTUA in use, R
                    -<N >RC=all LTUA in use, R
-<N >?short  (wait)
    -<Y >?LRD available (wait, short)
        -<Y >assign LRD, I&R
        -<N >?all allocated LRD are LTUA  (wait,
                short, no LRD)
            -<Y >?wait shorts only
                -<Y >RC=all busy LTUA, R
                -<N >queue it
            -<N >queue it
    -<N >?LRD available  (wait, LTUA)
        -<Y >?below LTUA limit  (wait, LTUA, LRD
                available)
            -<Y >?add LTUA queued & still below
                    LTUA limit  (wait, LTUA, LRD,
                    below limit)
                -<Y >assign LRD, I&R
                -<N >?wait for shorts only
                    -<Y >queue it
                    -<N >RC=all LTUA in use, R
            -<N >?wait for shorts only (wait, LTUA,
                    LRD, above limit)
                -<Y >queue it
                -<N >RC=all LTUA in use, R

        -<N >?below LTUA limit   (wait, LTUA, no LRD)
            -<Y >queue it
            -<N >?wait for shorts only (wait, LTUA,
                    no LRD, above limit)
                -<Y >RC=all LTUA in use, R
                -<N >queue it
```

The flowchart for deallocating a device 13 is shown below

```
-Update inventory for available LRD
-DO WHILE LRD available
  -?under LTUA limit
    -<Y >?queued LTUA(get oldest) (under LTUA limit)
        -<Y >assign LRD, I&R
        -<N >?queued short(get oldest) (under LTUA
                  limit, no queued LTUA requests)
            -<Y >assign LRD, I&R
            -<N >R
    -<N >?queued short(get oldest) (over LTUA limit)
        -<Y >assign LRD, I&R
        -<N >R
-END of DO WHILE LRD available.
```

For efficient management the various programs in the host processor 10 may query the status of the access to a library subsystem or other resources being managed in accordance with the present invention. Such query causes the following response from a program 57.

```
-?Query Inventory flag set
  -<Y >produce report of inventory configuration and
          current in-use status
->R
```

The production of reports and accumulating of information from tables 38 and other places is a well known programming operation and is not detailed for that reason. In addition, usual inventory, journaling, verification and updates are multihost serialized using known techniques. Inventory can also be backed up and dual copied for reliability purposes.

**Claims**

1. In a data processing system, in combination:
a multiported subsystem (11) having a plurality of addressable access ports (13) for data communications;
a control (15) connected to the subsystem for controlling allocation of said access ports;
limitation means (20) in the control for storing and indicating a proration of said access ports for short duration accesses and long duration accesses, said short duration accesses being high priority accesses and said long duration accesses being deferrable priority accesses;
requestor means coupled to said ports and to said control for supplying short duration and long duration access requests for said access ports; and
port accessing control means in the control being operatively coupled to said ports, to said requestor means and to said limitation means for responding to said indicated proration and to said supplied access requests for allowing any of said short duration access requests to any of said access ports if available and limiting said long duration access requests to a predetermined proportion of said access ports.

2. The invention set forth in claim 1, further including, in combination:

a calendar clock (24) in said limitation means for changing said proration indication during times of day such that during working times of a given day said proration indication allows fewer of said long duration accesses than during non-working times of the given day.

3. The invention set forth in claim 1, further including, in combination:
said subsystem being a record media library having means for transporting media between storage locations of the record media library and said addressable access ports; and
said addressable access ports comprising record media players capable of receiving said transported media and reading data recorded thereon and supplying same as an output data communication.

4. The invention set forth in claim 3, further including, in combination:
said port accessing control means having a first queue for all of said short access requests that are deferred because of access contention for any of said access ports and a second queue for all of said long access requests that are deferred because of access contention for said prorated proportion of said access ports for the long duration accesses including returning to said requestor means predetermined ones of said supplied long duration access requests which indicate a priority of action as not being performable by said subsystem.

5. In a method of automatically operating a data processing system having a multiported resource with accesses to the resource being from a plurality of user processes via addressable port;
the machine-executed steps of:
establishing short and long duration access classes; and
At each given instant of data processing system operation, limiting the long duration accesses to a predetermined number of said ports while allowing short duration accesses to use all of the ports.

6. In the method set forth in claim 5, further including automatically varying the predetermined number during each calendar day for allowing more of the long duration accesses during non-working hours.

7. In the method set forth in claim 5, further including, automatically establishing:
a long duration access rather than a short duration access whenever the predetermined number of said ports for the long duration accesses are being used for short duration accesses.

8. In the method set forth in claim 5, further including automatically determining which accesses are to be short or long duration accesses by either measuring a requested extent of access, the type of command causing the access, the name of a requesting user process or by an explicit designation of type.

9. In the method set forth in claim 5, further including automatically determining that a number of ports to the resource have changed and then automatically changing the predetermined number.

_Fig.1_

_Fig.2_

FIG-3

FIG-4